# EUROPEAN PATENT APPLICATION

(11) **EP 3 819 066 A1**
(43) Date of publication of application: **12.05.2021**
(21) Application number: 19831228.2
(22) Date of filing: 03.06.2019
(51) Int. Cl.: B23K 26/244, B62D 25/04

(54) **JOINT**

(30) Priority: 06.07.2018 JP 2018129355
(71) Applicant: KABUSHIKI KAISHA KOBE SEIKO SHO (KOBE STEEL, LTD.), Hyogo 651-8585 (JP)
(72) Inventor: YASUI, Kazuya, Kobe-shi, Hyogo 651-2271 (JP); WATANABE, Kenichi, Kobe-shi, Hyogo 651-2271 (JP); SHI, Dongyong, Kobe-shi, Hyogo 651-2271 (JP); HADANO, Masao, Fujisawa-shi, Kanagawa 251-8551 (JP); CHEN, Liang, Fujisawa-shi, Kanagawa 251-8551 (JP)
(74) Representative: TBK
(86) International application number: PCT/JP2019/022014
(87) International publication number: WO 2020/008772

(57) **Abstract**

The joined body 1 includes a joint portion 5 including a linear welding portion 4 in which a first metal member 2 and a second metal member 3 are joined. The joint portion 5 includes a main linear portion being linear 21 and extending along a first direction LD being a direction corresponding to a load assumed to act on a component obtained by machining the joined body 1. The main linear portion 21 is a portion whose angle formed with the first direction is 0 degrees or more and 15 degrees or less in the joint portion 5. The joint portion 5 includes a plurality of the main linear portions arranged at intervals in a second direction SD being a direction intersecting with the first direction LD.

## Description

### TECHNICAL FIELD

The present invention relates to a joined body.

### BACKGROUND ART

Patent Documents 1 and 2 disclose a joined body manufactured by joining two metal members, that is, a first metal member and a second metal member by laser welding. Patent Document 1 discloses that the joint portion formed by the welding marks or welding portions of laser welding is one or more pairs of straight lines parallel to each other. In addition, Patent Document 2 discloses that the joint portion has a plurality of continuously arranged C-shaped portions, and part of adjacent C-shaped portions overlap.

### PRIOR ART DOCUMENT

### PATENT DOCUMENT

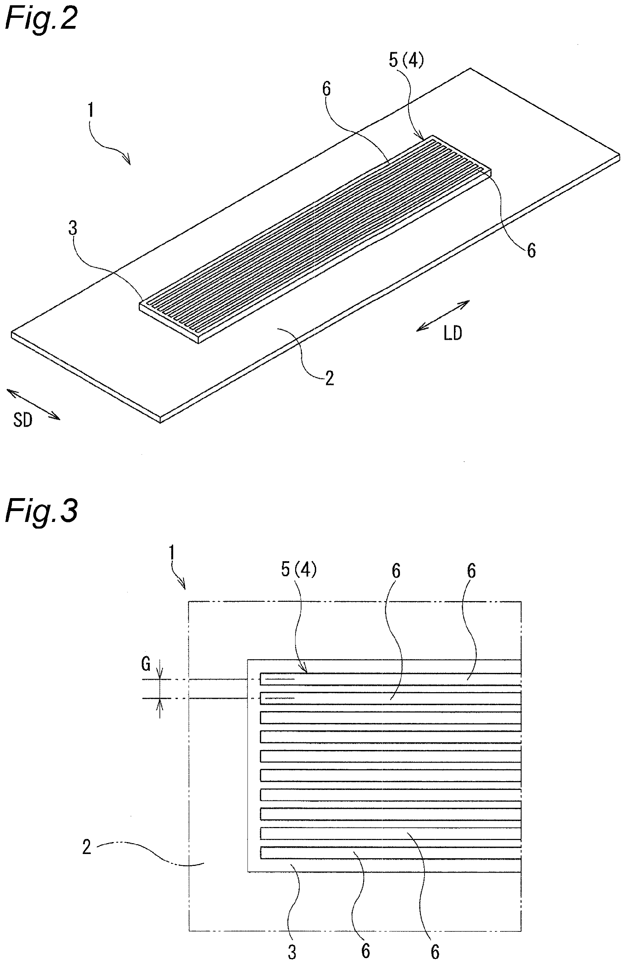

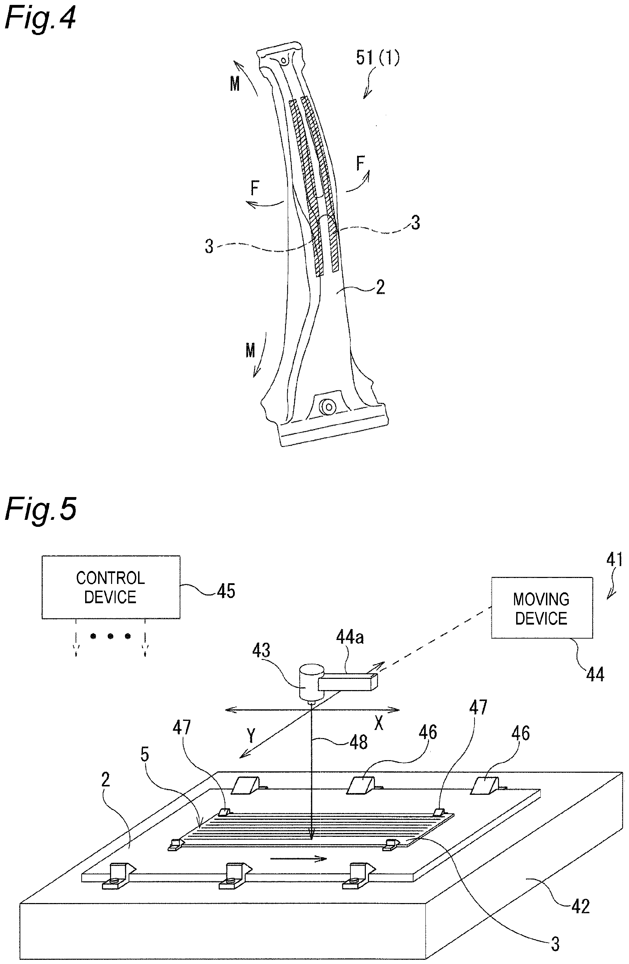

Patent Document 1: JP 2001-507993 T (Figs. 3 and 5)
Patent Document 2: JP 2014-15206 A (Fig. 4(f))

### SUMMARY OT THE INVENTION

### PROBLEMS TO BE SOLVED BY THE INVENTION

In conventional joined bodies of this type, including those disclosed in Patent Documents 1 and 2, the strength after being machined into a component having a specific shape has not been considered. For example, when a joined body of this type is machined into a vehicle body structural component by hot stamping (hot pressing), it is not considered what mode of joint portion can increase the strength of the vehicle body structural component with respect to the assumed load (for example, the load acting at the time of collision).

The present invention has an object to provide a joined body including a joint portion capable of increasing the strength after being machined into a component.

### MEANS FOR SOLVING THE PROBLEMS

The present inventors found new knowledge about the joined body in which, at the joint portion including the linear welding portions, the two stacked metal members are joined. Specifically, the present inventors found that the joint portion has a linear component extending in the direction corresponding to the load assumed to act on the component, thereby capable of enhancing the strength of the component obtained by machining this joined body. For example, when a bending moment acts on a relatively long component obtained by machining this joined body, it was found that providing the joint portion with a linear component extending in the direction of the bending moment increases the buckling strength of the component. The present invention is based on these new findings.

One aspect of the present invention provides a joined body including: a first metal member; a second metal member superposed on the first metal member; and a joint portion including a linear welding portion in which the first metal member and the second metal member are joined. The joint portion includes a main linear portion being linear and extending along a first direction being a direction corresponding to a load assumed to act on a component obtained by machining the joined body. The main linear portion is a portion whose angle formed with the first direction is 0 degrees or more and 15 degrees or less in the joint portion. The joint portion includes a plurality of the main linear portions arranged at intervals in a second direction being a direction intersecting with the first direction.

The joint portion includes a linear portion extending along a first direction being a direction corresponding to a load assumed to act on a component obtained by machining the joined body, that is, a main linear portion. Therefore, the strength after being machined into a component can be increased by the joint portion.

In order to increase the strength of the component obtained by machining the joined body, a distance in the second direction between a pair of the main linear portions adjacent to each other in the second direction may be 15 mm or less.

A total length of the main linear portions can be set to 74% or more and 97% or less of a total path length of the joint portion.

Since the main linear portion occupies most of the joint portion, the strength after being machined into a component can be further increased by the joint portion.

The main linear portion may include: a plurality of first main linear portions slanting as a whole to one orientation of a second direction being a direction intersecting with the first direction, and a plurality of second main linear portions slanting as a whole to an orientation opposite to the orientation of the second direction. The joint portion may include: a plurality of first units including a pair of the first main linear portions connected to each other via a first reversing portion, and a plurality of second units including a pair of the second main linear portions connected to each other via a second reversing portion. Each of the first units and each of the second units may be alternately arranged via a third reversing portion.

In order to increase the strength of the component obtained by machining the joined body, a distance in the second direction between a pair of the first and second main linear portions adjacent to each other in the second direction may be 15 mm or less.

An arrangement density in the second direction of the main linear portion in an end portion region in the second direction of the second metal member may be higher than an arrangement density in the second direction of the main linear portion in a central region in the second direction of the second metal member.

With this configuration, when the joined body is pressed, the force acting on the end portion region of the second metal member can suppress or prevent peeling of the second metal member from the first metal member in the end portion region of the second metal member.

### EFFECT OF THE INVENTION

According to the joined body according to the present invention, the strength after being machined into a component can be increased by the joint portion.

### BRIEF DESCRIPTION OF THE DRAWINGS

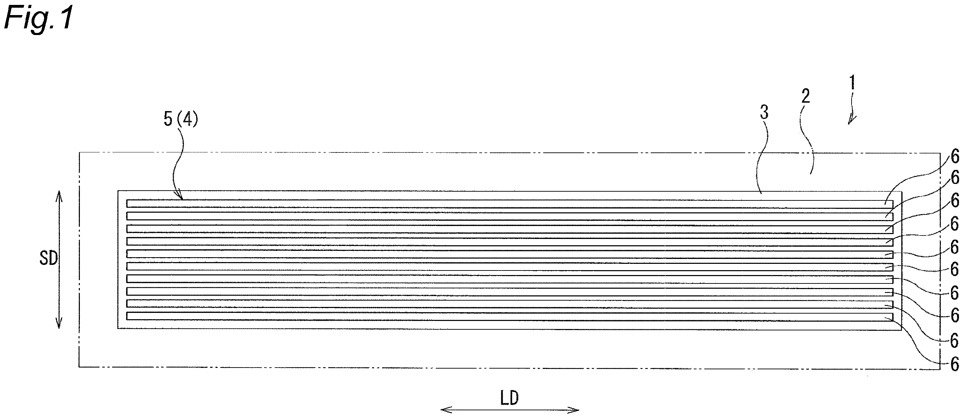

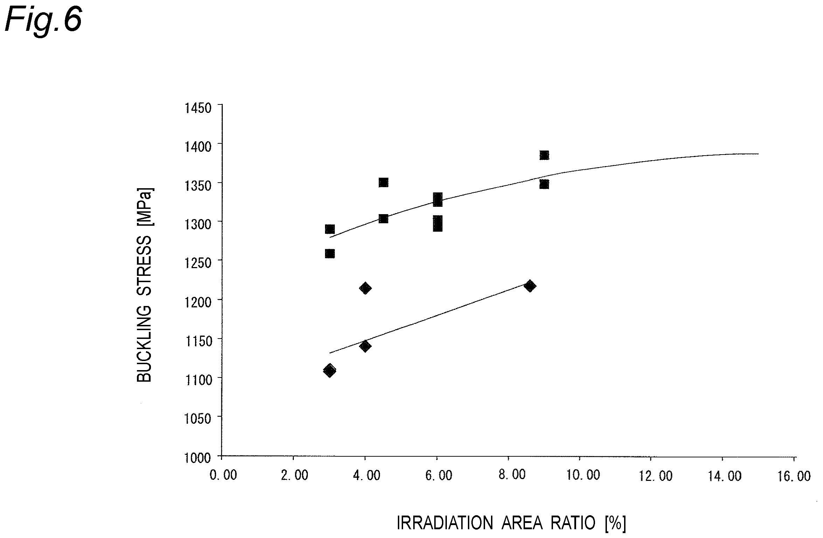

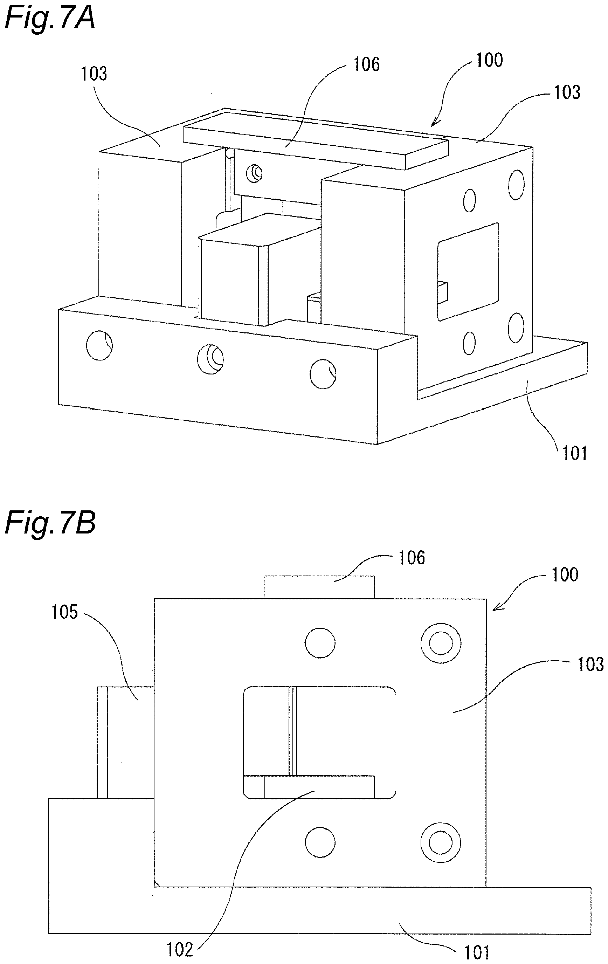

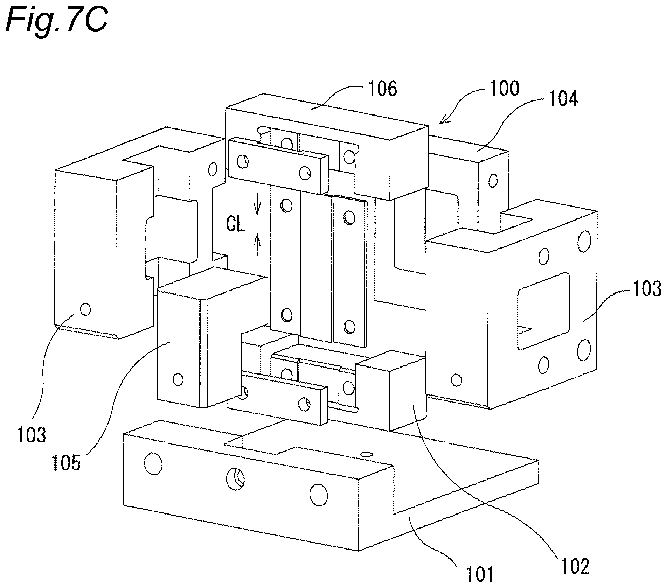

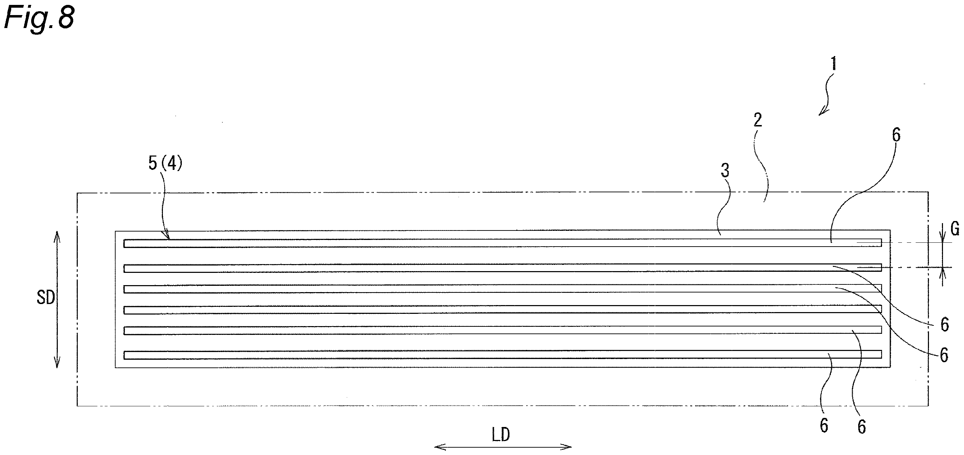

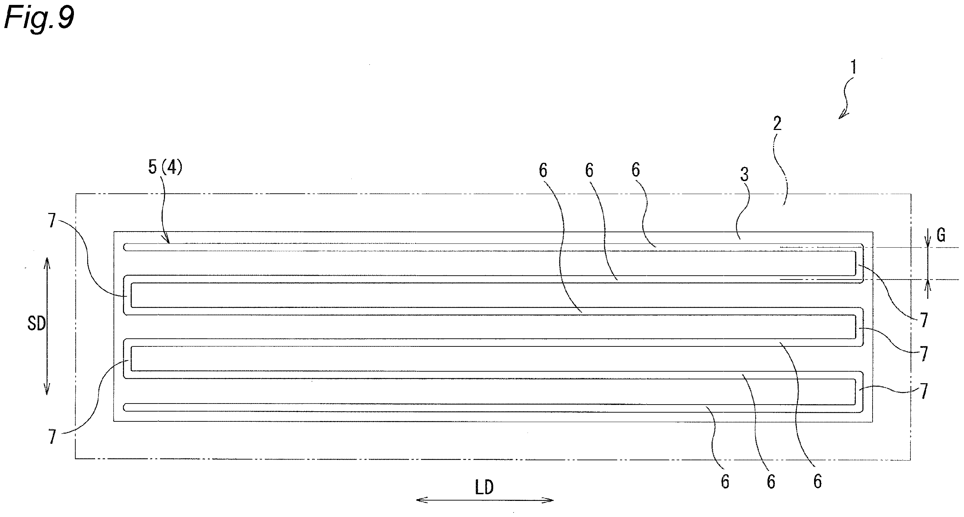

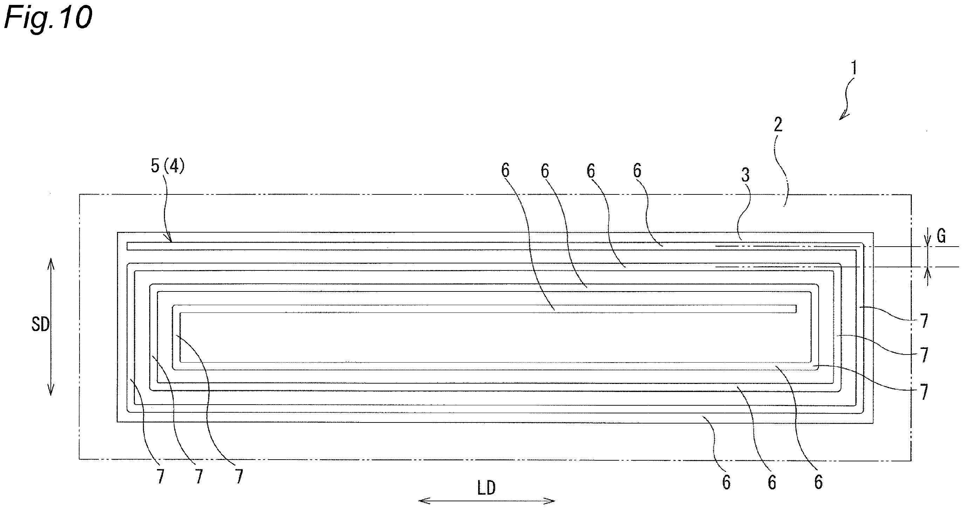

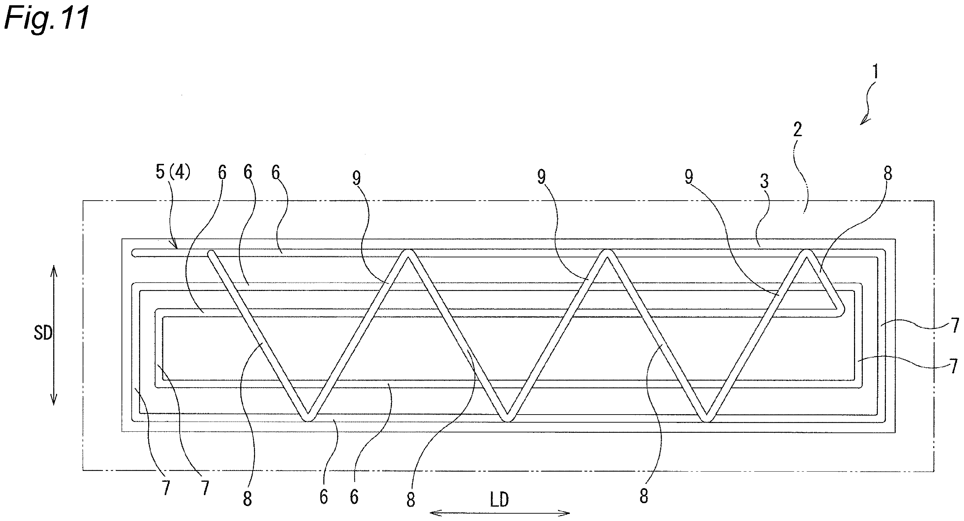

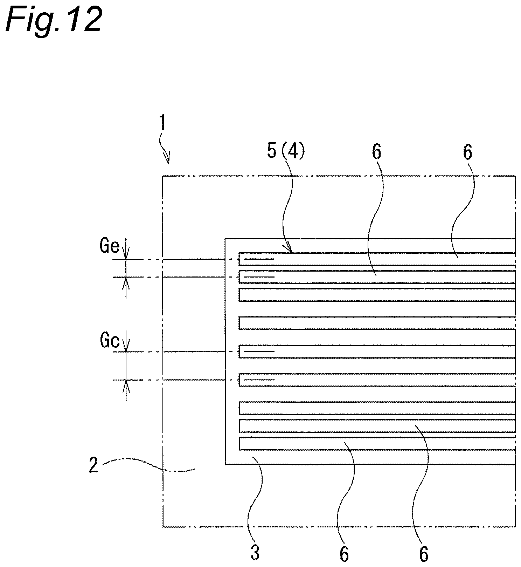

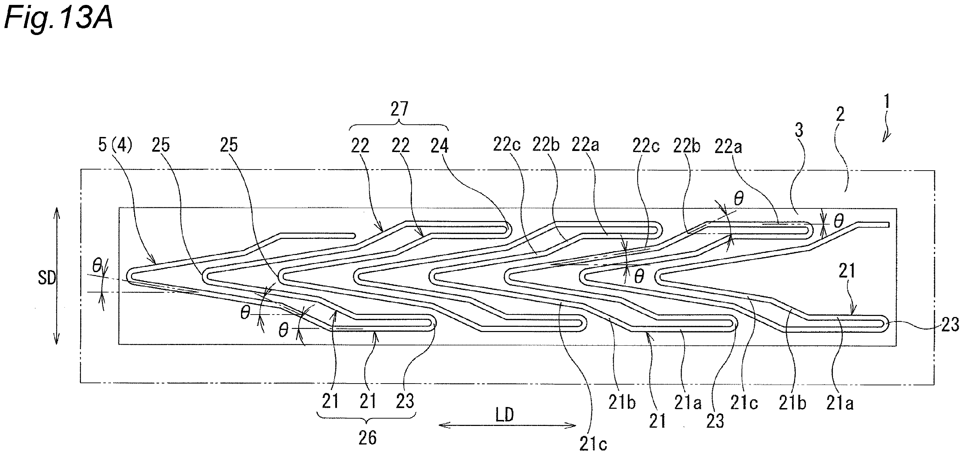

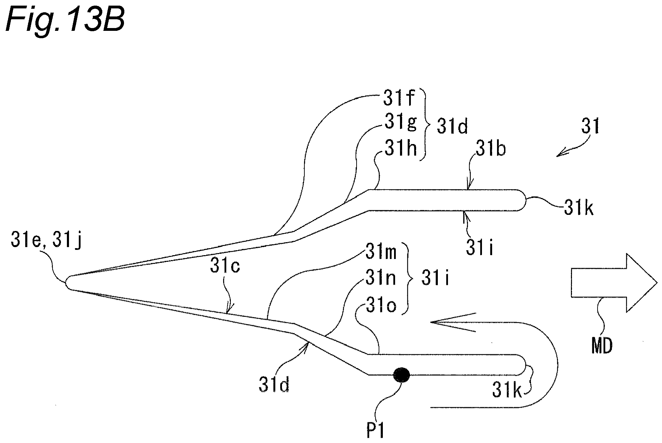

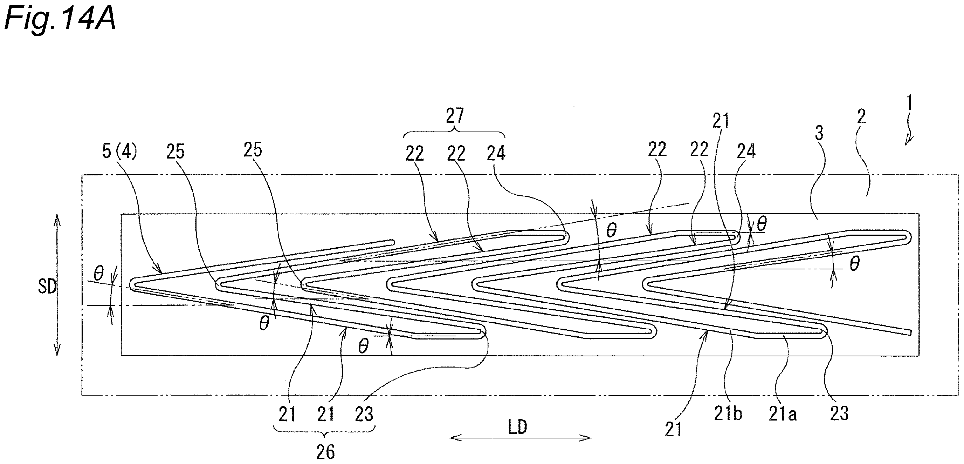

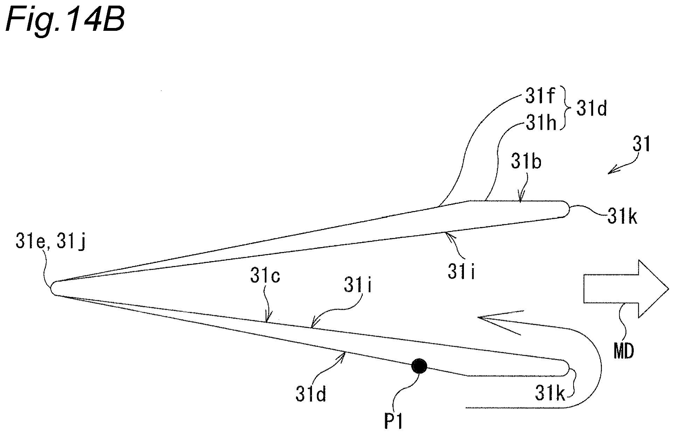

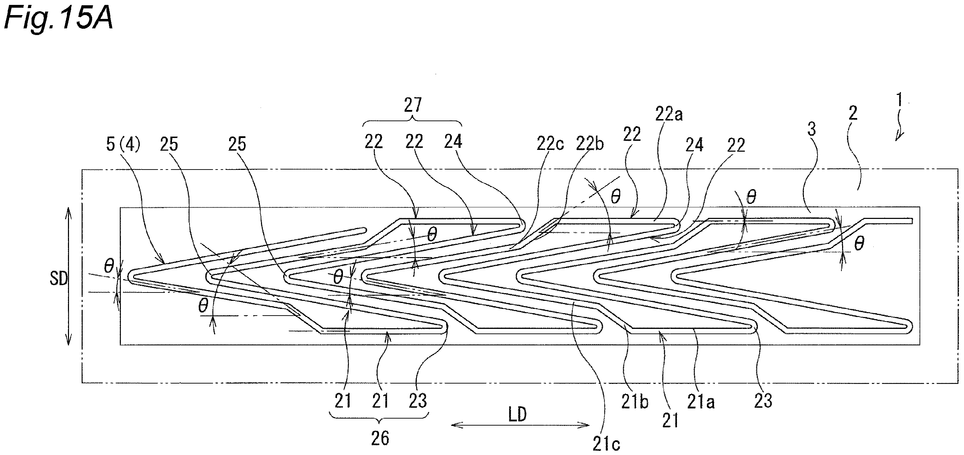

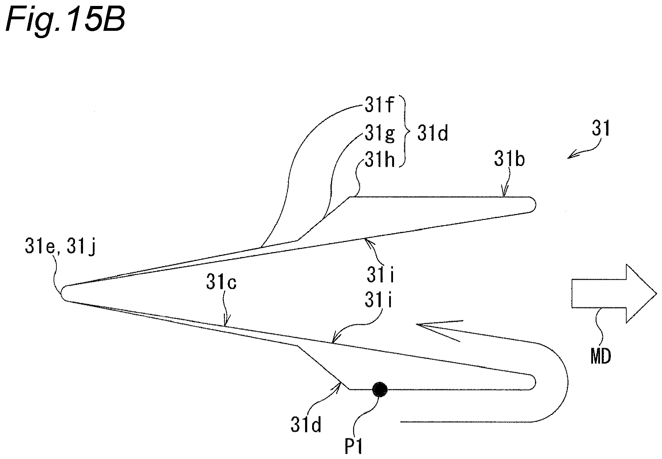

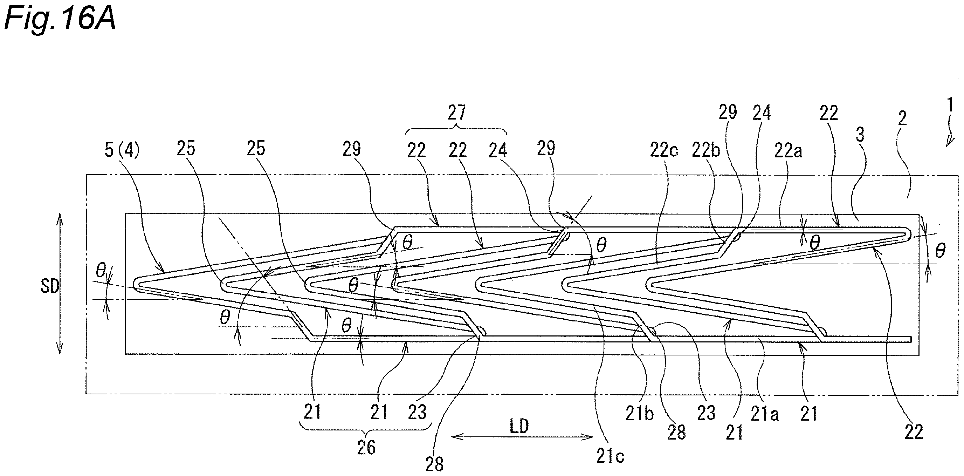

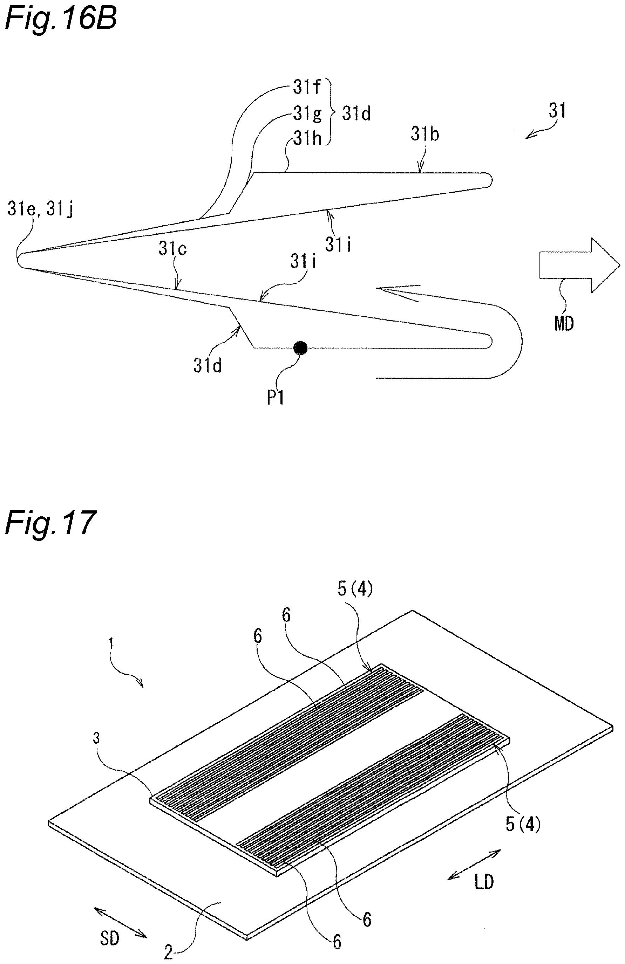

Fig. 1 is a plan view of a joined body according to a first embodiment of the present invention; Fig. 2 is a perspective view of the joined body in Fig. 1; Fig. 3 is a partially enlarged view of Fig. 1; Fig. 4 is a perspective view showing a B pillar manufactured by machining the joined body by hot stamping; Fig. 5 is a schematic perspective view of a laser welding device; Fig. 6 is a graph showing the relationship between the irradiation area ratio and the buckling stress; Fig. 7A is a perspective view of the crushing jig; Fig. 7B is a right side view of the crushing jig; Fig. 7C is an exploded perspective view of the crushing jig; Fig. 8 is a plan view of a joined body according to a second embodiment of the present invention; Fig. 9 is a plan view of a joined body according to a third embodiment of the present invention; Fig. 10 is a plan view of a joined body according to a fourth embodiment of the present invention; Fig. 11 is a plan view of a joined body according to a fifth embodiment of the present invention; Fig. 12 is a plan view of a joined body according to a sixth embodiment of the present invention; Fig. 13A is a plan view of a joined body according to a seventh embodiment of the present invention; Fig. 13B is a schematic diagram of an irradiation pattern in the joined body in Fig. 13A; Fig. 14A is a plan view of a joined body according to an eighth embodiment of the present invention; Fig. 14B is a schematic diagram of an irradiation pattern in the joined body in Fig. 14A; Fig. 15A is a plan view of a joined body according to a ninth embodiment of the present invention; Fig. 15B is a schematic diagram of an irradiation pattern in the joined body in Fig. 15A; Fig. 16A is a plan view of a joined body according to a tenth embodiment of the present invention; Fig. 16B is a schematic diagram of an irradiation pattern in the joined body in Fig. 16A; Fig. 17 is a plan view of a joined body according to a modified example of the present invention.

### DESCRIPTION OF EMBODIMENTS

### (First Embodiment)

Figs. 1 to 3 show a joined body 1 according to a first embodiment of the present invention. The joined body 1 includes a blank material 2 (first metal member) being an example of a steel plate, and a reinforcing material 3 (second metal member) being similarly an example of a steel plate. In the present embodiment, the reinforcing material 3 is narrower in width than the blank material 2.

The reinforcing material 3 is superposed on the blank material 2. The joined body 1 includes a joint portion 5 including one continuous linear welding mark or a welding portion 4. The blank material 2 and the reinforcing material 3 are joined to each other by the joint portion 5. In the joined body 1 of the present embodiment, the joint portion 5 includes 10 linear portions 6 (main linear portions) extending in the longitudinal direction LD (first direction) of the reinforcing material 3.

In addition, with reference to Fig. 4, the joined body 1 of the present embodiment is machined into a B pillar 51 being an example of a vehicle body structural component by hot stamping (hot pressing). In Fig. 4, two reinforcing materials 3 are joined to the blank material 2, and each of the reinforcing materials 3 is joined to the ridgeline portion formed by hot stamping. In drawings other than Fig. 4, only one reinforcing material 3 is shown for ease of understanding.

The reinforcing material 3 is fixed to the blank material 2 by laser welding using, for example, a laser welding device 41 as shown in Fig. 5. The laser welding device 41 includes a table 42, a laser oscillation system 43, a moving device 44, and a control device 45.

The blank material 2 is placed on the upper surface of the table 42 and fixed to the table 42 by a jig 46. The reinforcing material 3 superposed on the blank material 2 is fixed to the blank material 2 by a jig 47. The reinforcing material 3 may be fixed to the blank material 2 by welding for temporary fixing such as spot welding. In addition, the blank material 2 and the reinforcing material 3 may be fixed to the table 42 by the magnetic attraction force generated by the magnetic field generated by the magnetic field generating device arranged below the table 42.

The laser oscillation system 43 includes elements necessary for generating laser light, such as a laser oscillation element, a drive circuit, and an optical system. A laser beam 48 is emitted downward from the laser oscillation system 43.

The moving device 44 moves the laser oscillation system 43. The laser oscillation system 43 is fixed to a movable arm 44a included in the moving device 44 in an attitude in which the laser beam 48 faces downward. The movable arm 44a moves the laser oscillation system 43 in two directions in the horizontal plane, that is, in the X direction and the Y direction, so that the irradiation position of the laser beam 48 moves along the joint portion 5. The laser beam 48 applied to the surface of the reinforcing material 3 forms the joint portion 5 for joining the reinforcing material 3 and the blank material 2.

The control device 45 comprehensively controls the operation of various elements of the laser welding device 41, including the laser oscillation system 43 and the moving device 44.

The present inventors found new knowledge about the joined body 1 as shown in the present embodiment in which, at the joint portion 5 including the linear welding portions 4, the two stacked metal members are joined, that is, the reinforcing material 3 is joined to the blank material 2. Hereinafter, this point will be described.

The present inventors conducted a test simulating the buckling of the web surface when the joined body 1 in which the reinforcing material 3 was welded to the blank material 2 was machined into the B pillar 51 as shown in Fig. 4 by hot stamping. In this test, the joined body 1 being an elongated flat plate was attached to a crushing jig 100 shown in Figs. 7A to 7C, and the buckling stress of the joined body 1 was measured when an in-plane compressive load in the longitudinal direction was applied by a press machine.

The elements constituting the crushing jig 100 are assembled by bolts (not shown). The crushing jig 100 includes a base 101 to be arranged on the table of the press machine. A lower side holding block 102 for holding the lower end side of the joined body 1, a pair of side blocks 103, a rear block 104, and a front block 105 are fixed to the base 101. The upper end side of the joined body 1 is held by the upper side holding block 106. The upper side holding block 106 is held to be movable only in the vertical direction by the side block 103. The front block 105 includes a protruding portion 105a facing the joined body 1. The compressive load of the press machine acts on the joined body 1 via the upper side holding block 106. The direction of the compressive load denoted by the reference numeral CL shown in Fig. 7C corresponds to the bending moment M (see Fig. 4) acting on the B pillar 51 being a relatively long member when the vehicle collides.

Fig. 6 shows the measurement result of the buckling load, the horizontal axis represents the ratio of the joint portion 5 to the area of the reinforcing material 3, that is, the irradiation area ratio, and the vertical axis represents the buckling stress. In Fig. 6, the symbol "■" indicates a case where the joint portion 5 includes a plurality of linear portions 6 extending in the longitudinal direction LD of the reinforcing member 3 as in the present embodiment, that is, a case where the linear portion 6 is provided so as to extend in the direction of the compressive load CL (the direction of the bending moment M assumed to act on the B pillar 51). In addition, in the figure, the symbol "◆" indicates a case where the joint portion 5 includes a plurality of linear portions extending in the lateral direction SD (second direction) of the reinforcing member 3, that is, a case where the linear portion 6 is provided so as to extend in a direction orthogonal to the compressive load CL (a direction orthogonal to the direction of the bending moment M assumed to act on the B pillar 51).

From the graph in Fig. 6, as in the present embodiment, the joint portion 6 includes lines extending in the longitudinal direction of the reinforcing material 3, that is, in the direction of the bending moment M assumed to act on the B pillar 51, whereby it can be seen that the buckling strength of the B pillar 51 is increased. Thus, the present inventors found that the joint portion has a linear component extending in the direction corresponding to the load assumed to act on the component, thereby capable of enhancing the strength of the component obtained by machining the joined body.

In addition, from the graph in Fig. 6, it can be seen that when the joint portion 6 includes lines extending in the longitudinal direction of the reinforcing material 3, the higher the irradiation area ratio, the higher the buckling stress. Thus, the present inventor found that when the joint portion has a linear component extending in the direction corresponding to the load assumed to act on the component, the higher the rate of such a linear component occupying in the joint portion, the more effectively the strength of the component obtained by machining the joined body can be increased.

Referring to Figs. 1 to 3, as described above, in the joined body 1 of the present embodiment, the joint portion 5 includes 10 linear portions 6 (main linear portions) extending in the longitudinal direction LD of the reinforcing material 3. In the present embodiment, the linear portion 6 does not have a curved portion and can be regarded as a substantially geometric straight line. In other words, the linear portion 6 in the present embodiment is straight linear. The linear portion 6 of the present embodiment has an angle θ formed with respect to the longitudinal direction LD at 0 degrees. That is, the linear portion 6 in the present embodiment does not slant to the lateral direction SL. In addition, the linear portions 6 are provided at regular intervals G in a direction orthogonal to the longitudinal direction LD, that is, in the lateral direction SD of the reinforcing material 3.

When the joined body 1 of the present embodiment is machined into the B pillar 51 by hot stamping, all of a plurality of linear portions 6 constituting the joint portion 5 extend in the direction of the bending moment M. That is, in the present embodiment, the total length of the linear portions 6 extending in the direction of the bending moment M (the sum of the lengths of the individual linear portions 6) occupies 100% of the total path length of the joint portion 5. With this configuration, the buckling strength of the B pillar 51 obtained by machining and manufacturing the joined body 1 can be increased.

In order to increase the buckling strength of the B pillar 51 obtained by machining, it is preferable to set the distance G between the linear portions 6 to 15 mm or less.

As described above, the angle θ formed by the linear portion 6 in the present embodiment with respect to the longitudinal direction LD is 0 degrees. However, the linear portion 6 does not necessarily need to extend parallel to the geometric longitudinal direction LD. That is, when the angle θ is 0 degrees or more and 15 degrees or less, the buckling strength of the B pillar 51 obtained by machining and manufacturing the joined body 1 can be increased.

### (Second Embodiment)

Referring to Fig. 8, in the joined body 1 of the present embodiment, the joint portion 5 includes six linear portions 6 arranged in the lateral direction SD at a constant interval G, wider than that of the first embodiment. Also in the present embodiment, when the joined body 1 is machined into the B pillar 51, the total length of the linear portions 6 extending in the direction of the bending moment M occupies 100% of the total path length of the joint portion 5, and the buckling strength of the B pillar 51 can be increased.

### (Third Embodiment)

Referring to Fig. 9, in the joined body 1 of the present embodiment, the joint portion 5 includes six linear portions 6 arranged in the lateral direction SD at regular intervals G. In addition, the joint portion 5 includes a plurality of linear portions 7 each connecting one end of a pair of linear portions 6 adjacent to each other in the lateral direction SD, and the individual linear portions 7 extend in a direction orthogonal to the longitudinal direction LD, that is, the lateral direction SD. A crank shape is formed by the linear portion 6 and the linear portion 7. Including a linear portion 6 extending in the longitudinal direction LD by the joint portion 5 allows the buckling strength of the B pillar 51 obtained by machining and manufacturing the joined body 1 to be increased.

The total path length of the joint portion 5 in the present embodiment is the sum of the total length of the linear portions 6 and the total length of the linear portions 7. The total length of the linear portions 6 extending in the longitudinal direction LD occupies most of the total path length of the joint portion 5, that is, about 97%. Therefore, the buckling strength of the B pillar 51 obtained by machining and manufacturing the joined body 1 can be further increased.

### (Fourth Embodiment)

Referring to Fig. 10, in the joint portion 5 of the present embodiment, the joint portion 5 includes seven linear portions 6 extending in the longitudinal direction LD and arranged in the lateral direction SD and six linear portions 7 extending in the lateral direction SD and connecting the seven linear portions 6 in sequence. A spiral shape is formed with the linear portions 6 and the linear portions 7. Including a linear portion 6 extending in the longitudinal direction LD by the joint portion 5 allows the buckling strength of the B pillar 51 obtained by machining and manufacturing the joined body 1 to be increased. In addition, the total length of the linear portions 6 extending in the longitudinal direction LD occupies most of the total path length of the joint portion 5, that is, about 92%. Therefore, the buckling strength of the B pillar 51 obtained by machining and manufacturing the joined body 1 can be further increased.

### (Fifth Embodiment)

Referring to Fig. 11, in the joined body 1 of the present embodiment, the joint portion 5 includes five linear portions 6 extending in the longitudinal direction LD and arranged in the lateral direction SD and four linear portions 7 extending in the lateral direction SD and connecting the five linear portions 6 in sequence. A spiral shape is formed with the linear portions 6 and the linear portions 7. In addition, in the joint portion 5, two types of slanting linear portions 8 and 9 slanting to different directions with respect to the longitudinal direction LD are provided alternately and repeatedly from the innermost end of the spiral shape. Including a linear portion 6 extending in the longitudinal direction LD by the joint portion 5 allows the buckling strength of the B pillar 51 obtained by machining and manufacturing the joined body 1 to be increased. The total length of the linear portions 6 extending in the longitudinal direction LD occupies most of the total path length of the joint portion 5, that is, about 74%. Therefore, the buckling strength of the B pillar 51 obtained by machining and manufacturing the joined body 1 can be further increased.

### (Sixth Embodiment)

Referring to Fig. 12, the joint portion 5 of the present embodiment includes nine linear portions 6 extending in the longitudinal direction LD and arranged in the lateral direction SD. The distance Ge between the linear portions 6 in the end portion region in the lateral direction SD of the reinforcing material 3 is narrower than the distance Gc between the linear portions 6 in the central region in the lateral direction SD of the reinforcing material 3. In other words, the arrangement density of the linear portions 6 in the end portion region in the lateral direction SD of the reinforcing material 3 is higher than the arrangement density of the linear portions 6 in the central region in the lateral direction SD of the reinforcing material 3. With this configuration, when the joined body 1 is machined into the B pillar 51 by hot stamping, the force acting on the end portion region in the lateral direction SD of the reinforcing material 3 (conceptually indicated by the reference numeral F in Fig. 4) can suppress or prevent peeling from the blank material 2 in the end portion region in the lateral direction SD of the reinforcing material 3.

### (Seventh Embodiment)

The joint portion 5 shown in Fig. 13A can be obtained by the movement of the closed figure (irradiation pattern 31), drawn by the irradiation position P1 of the laser beam 48 shown in Fig. 13B, from one end side toward the other end side of the reinforcing material 3 as indicated by the arrow MD.

The irradiation pattern 31 in Fig. 13B includes two wedge-shaped portions each having a shape that widens in the moving direction MD, that is, an outer side wedge-shaped portion 31b and an inner side wedge-shaped portion 31c arranged inside the outer side wedge-shaped portion 31b.

The outer side wedge-shaped portion 31b includes a pair of oblique side portions 31d slanting as a whole to the moving direction MD, and an arc-shaped tip portion 31e connecting these oblique side portions 31d. The individual oblique side portion 31d includes a linear first portion 31f whose one end is connected to the tip portion 31e, a linear second portion 31g whose one end is connected to the other end of the first portion 31f, and a third portion 31h whose one end is connected to the other end of the second portion 31g. In this example, the angle with respect to the moving direction MD is larger in the order of the second portion 31g, the first portion 31f, and the third portion 31h, and the third portion 31h extends in substantially the same direction as the moving direction MD. In addition, in this example, the length of the second portion 31g is smaller than those of the first portion 31f and the second portion 31h.

The inner side wedge-shaped portion 31c includes a pair of linear oblique side portions 31i slanting to the moving direction MD, and an arc-shaped tip portion 31j connecting these oblique side portions 31i. The tip portion 31j of the inner side wedge-shaped portion 31c generally overlaps with the tip portion 31e of the outer side wedge-shaped portion 31b. The individual oblique side portion 31i includes a linear first portion 31m whose one end is connected to the tip portion 31j, a linear second portion 31n whose one end is connected to the other end of the first portion 31m, and a third portion 31o whose one end is connected to the other end of the second portion 31n.

The individual oblique side portions 31d of the outer side wedge-shaped portion 3 1b are connected to the adjacent ones of the oblique side portions 31i of the inner side wedge-shaped portion 31c via an arc-shaped reversing portion 31k.

With reference also to Fig. 13A, the joint portion 5 obtained in the irradiation pattern 31 in Fig. 13B includes a plurality of first linear portions 21 (first main linear portions) and a plurality of second linear portions 22 (second main linear portions).

The individual first linear portions 21 roughly extend in the longitudinal direction LD, but slant downward to the right in the drawing in the lateral direction SD as a whole. The first linear portion 21 includes a first portion 21a extending in the longitudinal direction LD, a second portion 21b having one end connected to the first portion 21a, and a third portion 21c having one end connected to the second portion 21b. The angle θ formed with respect to the longitudinal direction LD of the first portion 21a is set to 0 degrees. The angle θ formed with respect to the longitudinal direction LD of the third portion 21c is set to be more than 0 degrees and 15 degrees or less.

The individual second linear portions 22 roughly extend in the longitudinal direction LD, but slant upward to the right in the drawing in the lateral direction SD as a whole. The second linear portion 22 includes a first portion 22a extending in the longitudinal direction LD, a second portion 22b having one end connected to the first portion 22a, and a third portion 22c having one end connected to the second portion 22b. The angle θ formed with respect to the longitudinal direction LD of the first portion 22a is set to 0 degrees. The angle θ formed with respect to the longitudinal direction LD of the third portion 22c is set to be more than 0 degrees and 15 degrees or less.

A first unit 26 includes a pair of first linear portions 21 and one reversing portion 23 (first reversing portion) connecting them to each other. In addition, a second unit 27 includes a pair of second linear portions 22 and one reversing portion 24 (second reversing portion) connecting them to each other. The first unit 26 and the second unit 27 are alternately and repeatedly arranged via a reversing portion 25 (third reversing portion).

Since the joint portion 5 of the present embodiment includes the first linear portion 21 (excluding the second portion 21b) and the second linear portion 22 (excluding the second portion 22b) having an angle θ formed with respect to the longitudinal direction LD of 0 degrees or more and 15 degrees or less, it is possible to increase the buckling strength of the B pillar 51 obtained by machining and manufacturing the joined body 1.

In addition, in the joint portion 5 of the present embodiment, the total length of the first linear portion 21 (excluding the second portion 21b) and the second linear portion 22 (excluding the second portion 22b) having an angle θ formed with respect to the longitudinal direction LD of 0 degrees or more and 15 degrees or less, that is, the total length of the portion extending along the longitudinal direction LD occupies about 77% of the total path length of the joint portion 5. With this configuration, the buckling strength of the B pillar 51 obtained by machining and manufacturing the joined body 1 can be further increased.

As is clear with reference to Fig. 13A, the arrangement density of the first linear portion 21 and the second linear portion 22 in the end portion region in the lateral direction SD of the reinforcing material 3 is higher than the arrangement density of the first linear portion 21 and the second linear portion 22 in the central region in the lateral direction SD of the reinforcing material 3. With this configuration, when the joined body 1 is machined into the B pillar 51 by hot stamping, the force F acting on the end portion region in the lateral direction SD of the reinforcing material 3 (see Fig. 4) can suppress or prevent peeling from the blank material 2 in the end portion region in the lateral direction SD of the reinforcing material 3.

As is clear with reference to Fig. 13A, the individual first linear portion 21 and second linear portion 22 do not intersect with any one of the other first linear portion 21 and second linear portion 22, and the reversing portions 23 to 25. Therefore, no portion of the joint portion 5 constitutes a closed figure. Therefore, the gas generated during welding for forming the joint portion 5 is discharged to the outside from the mating surface of the blank material 2 and the joint material 3, so that defects such as blow holes do not occur at the connection region.

### (Eighth Embodiment)

The joint portion 5 shown in Fig. 14A is obtained by moving the irradiation pattern 31 shown in Fig. 14B in the moving direction MD.

In the irradiation pattern 31 in Fig. 14B, the oblique side portion 31d of the outer side wedge-shaped portion 31b includes a linear first portion 31f having one end connected to the tip portion 31e, and a third portion 31h roughly extending in the same direction as the moving direction MD. In addition, the oblique side portion 31i of the inner side wedge-shaped portion 31c is linear. The other shapes of the irradiation pattern 31 in Fig. 14B are similar to those in Fig. 13B. The elements in Fig. 14B common to those in Fig. 13B are denoted by the same reference numerals.

With reference also to Fig. 14A, in the joint portion 5 obtained in the irradiation pattern 31 in Fig. 14B, of the pair of first linear portions 21 constituting the first unit 26, the one positioned outside the reinforcing material 3 in the width direction includes a first portion 21a in which an angle θ formed with respect to the longitudinal direction LD is set to 0 degrees and a second portion 21b in which the angle θ is set above 0 degrees, and 15 degrees or less. In addition, of the pair of first linear portions 21 constituting the first unit 26, the one positioned inside the reinforcing material 3 in the width direction has a single linear shape whose angle θ with respect to the longitudinal direction LD is set to be above 0 degrees and 15 degrees or less. Similarly, of the pair of second linear portions 22 constituting the first unit 27, the one positioned outside the reinforcing material 3 in the width direction includes a first portion 22a in which an angle θ formed with respect to the longitudinal direction LD is set to 0 degrees and a second portion 22b in which the angle θ is set above 0 degrees, and 15 degrees or less. In addition, of the pair of second linear portions 22 constituting the second unit 27, the one positioned inside the reinforcing material 3 in the width direction has a single linear shape whose angle θ with respect to the longitudinal direction LD is set to be above 0 degrees and 15 degrees or less. The other shapes of the joint portion 5 in Fig. 14A are similar to those in Fig. 13A. The elements in Fig. 14A common to those in Fig. 13B are denoted by the same reference numerals.

Since the joint portion 5 in Fig. 14A includes a first linear portion 21 and a second linear portion 22 having angles θ formed with respect to the longitudinal direction LD of 0 degrees or more and 15 degrees or less, it is possible to increase the buckling strength of the B pillar 51 obtained by machining and manufacturing the joined body 1. In addition, the total length of the first linear portion 21 and the second linear portion 22 having angles θ formed with respect to the longitudinal direction LD of 0 degrees or more and 15 degrees or less occupies about 96% of the total path length of the joint portion 5. With this configuration, the buckling strength of the B pillar 51 obtained by machining and manufacturing the joined body 1 can be further increased. In addition, since the arrangement density of the first linear portion 21 and the second linear portion 22 in the end portion region in the lateral direction SD of the reinforcing material 3 is higher than the arrangement density of the first linear portion 21 and the second linear portion 22 in the central region in the lateral direction SD of the reinforcing material 3, when the joined body 1 is machined into the B pillar 51, it is possible to suppress or prevent peeling from the blank material 2 in the end portion region in the lateral direction SD of the reinforcing material 3. Furthermore, since the individual first linear portion 21 and second linear portion 22 do not intersect with any one of the other first linear portion 21 and second linear portion 22, and the reversing portions 23 to 25, the gas generated during welding for forming the joint portion 5 can be discharged to the outside.

### (Ninth Embodiment)

The joint portion 5 shown in Fig. 15A is obtained by moving the irradiation pattern 31 shown in Fig. 15B in the moving direction MD.

The irradiation pattern 31 shown in Fig. 15B is the same as the irradiation pattern 31 shown in Fig. 13B, except that the oblique side portion 31i of the inner side wedge-shaped portion 31c is linear.

In the joint portion 5 in Fig. 15A, of the pair of first linear portions 21 constituting the first unit 26, the one positioned inside the reinforcing material 3 in the width direction has a single linear shape whose angle θ with respect to the longitudinal direction LD is set to be above 0 degrees and 15 degrees or less. In addition, in the joint portion 5 in Fig. 15A, of the pair of second linear portions 22 constituting the second unit 27, the one positioned inside the reinforcing material 3 in the width direction has a single linear shape whose angle θ with respect to the longitudinal direction LD is set to be above 0 degrees and 15 degrees or less. Except for these points, the joint portion 5 in Fig. 15A is similar to that in Fig. 13A. The elements in Fig. 15A common to those in Fig. 13A are denoted by the same reference numerals.

Since the joint portion 5 in Fig. 15A includes a first linear portion 21 and a second linear portion 22 having angles θ formed with respect to the longitudinal direction LD of 0 degrees or more and 15 degrees or less, it is possible to increase the buckling strength of the B pillar 51 obtained by machining and manufacturing the joined body 1. In addition, the total length of the first linear portion 21 and the second linear portion 22 having angles θ formed with respect to the longitudinal direction LD of 0 degrees or more and 15 degrees or less occupies about 89% of the total path length of the joint portion 5. With this configuration, the buckling strength of the B pillar 51 obtained by machining and manufacturing the joined body 1 can be further increased. In addition, since the arrangement density of the first linear portion 21 and the second linear portion 22 in the end portion region in the lateral direction SD of the reinforcing material 3 is higher than the arrangement density of the first linear portion 21 and the second linear portion 22 in the central region in the lateral direction SD of the reinforcing material 3, when the joined body 1 is machined into the B pillar 51, it is possible to suppress or prevent peeling from the blank material 2 in the end portion region in the lateral direction SD of the reinforcing material 3. Furthermore, since the individual first linear portion 21 and second linear portion 22 do not intersect with any one of the other first linear portion 21 and second linear portion 22, and the reversing portions 23 to 25, the gas generated during welding for forming the joint portion 5 can be discharged to the outside.

### (Tenth Embodiment)

As shown in Fig. 16B, the joint portion 5 shown in Fig. 16A is obtained by moving the irradiation pattern 31 similar to that in Fig. 15B in the moving direction MD. The joint portion 5 in Fig. 16A is similar to that in Fig. 15A, except for including an intersecting portion 28 where the first linear portion 21 overlaps with the reversing portion 23 and an intersecting portion 29 where the second linear portion 22 overlaps with the reversing portion 24. Since the joint portion 5 in Fig. 16A includes the first linear portion 21 and the second linear portion 22 having angles θ formed with respect to the longitudinal direction LD of 0 degrees or more and 15 degrees or less, it is possible to increase the buckling strength of the B pillar 51 obtained by machining the joined body 1. In addition, since the total length of the first linear portion 21 and the second linear portion 22 whose angles θ formed with respect to the longitudinal direction LD are 0 degrees or more and 15 degrees or less occupies about 88% of the total path length of the joint portion 5, it is possible to further increase the buckling strength of the B pillar 51 obtained by machining the joined body 1. In addition, since the arrangement density of the first linear portion 21 and the second linear portion 22 in the end portion region in the lateral direction SD of the reinforcing material 3 is high, when the joined body 1 is machined into the B pillar 51, it is possible to suppress or prevent peeling of the reinforcing material 3 from the blank material 2.

Regarding the joint portion 5 also in the seventh to tenth embodiments, in order to increase the buckling strength of the B pillar 51 obtained by machining, it is preferable that of the first linear portion 21 and the second linear portion 22, the distance between the ones adjacent in the lateral direction SD be 15 mm or less.

In the first to sixth embodiments, the ratio of the total length of the linear portion, extending in the longitudinal direction LD, that is, having the angle θ of 0 degrees or more and 15 degrees or less, to the total path length of the joint portion 5 is a numerical value when the ratio of the dimensions in the longitudinal direction LD to the lateral direction SD of the reinforcing material 3 is 6 : 1. In addition, in the seventh to tenth embodiments, the ratio of the total length of the linear portion extending in the longitudinal direction LD to the total path length of the joint portion 5 is a numerical value when the dimension in the lateral direction SD of the reinforcing material 3, that is, the width of the reinforcing material 3 is 40 mm. However, the dimensions of the reinforcing material 3 are not limited to these, and can be changed as appropriate. The shape of the joint portion 5 is changed in a similar shape in accordance with the dimensions in the longitudinal direction LD and the lateral direction SD of the reinforcing material 3, so that the ratio of the total length of the linear portion extending in the longitudinal direction LD to the total path length of the joint portion 5 is 74% or more and 97% or less.

In the first to tenth embodiments, one joint portion 5 is provided for one reinforcing material 3. However, a plurality of joint portions 5 may be provided for one reinforcing material 3. For example, in the joined body 1 shown in Fig. 17, two joint portions 5 are provided for one reinforcing material 3. In this example, the individual joint portions 5 are the same or similar to those of the first embodiment (see Figs. 1 to 3) and include a plurality of linear portions 6 extending in the longitudinal direction LD. The individual joint portions 5 may be the same or similar to those of the second to tenth embodiments. When a plurality of joint portions 5 are provided for one reinforcing material 3 as in the example in Fig. 17, for each of the individual joint portions 5, the ratio of the total length of the linear portion extending in the longitudinal direction LD to the total path length of the joint portion 5 is set to 74% or more and 97% or less.

### REFERENCE SIGNS LIST

1: Joined body, 2: Blank material (first metal member), 3: Reinforcing material (second metal member), 4: Welding portion, 5: Joint portion, 6: Linear portion (main linear portion), 7: Linear portion, 8; 9: Linear portion, 21: First linear portion, 21 a: First portion, 21b: Second portion, 21c: Third portion, 22: Second linear portion, 22a: First portion, 22b: Second portion, 22c: Third portion, 23: Reversing portion (first reversing portion), 24: Reversing portion (second reversing portion), 25: Reversing portion (third reversing portion), 26: First unit, 27: Second unit, 28; 29: Intersecting portion, 31: Irradiation pattern, 31b: Outer side wedge-shaped portion, 31c: Inner side wedge-shaped portion, 31d; 31i: Oblique side portion, 31e; 31j: Tip portion, 31f; 31m: First portion, 31g; 31n: Second portion, 31h; 31o: Third portion, 31k: Reversing portion, 41: Laser welding device, 42: Table, 43: Laser oscillation system, 44: Moving device, 44a: Movable arm, 45: Control device, 46; 47: Jig, 48: Laser beam, 51: B pillar, 100: Crushing jig, 101: Base, 102: Lower side holding block, 103: Side block, 104: Rear block, 105: Front block, 105a: Protruding portion, 106: Upper side holding block, M: Bending moment, F: Force, LD: Longitudinal direction, SD: Lateral direction, G; Ge; Gc: Interval (distance), θ: Angle, MD: Moving direction of irradiation pattern, CL: Compressive load.

## Claims

1. A joined body comprising:
a first metal member;
a second metal member superposed on the first metal member; and
a joint portion including a linear welding portion in which the first metal member and the second metal member are joined,
wherein the joint portion includes a main linear portion being linear and extending along a first direction being a direction corresponding to a load assumed to act on a component obtained by machining the joined body,
wherein the main linear portion is a portion whose angle formed with the first direction is 0 degrees or more and 15 degrees or less in the joint portion, and
wherein the joint portion includes a plurality of the main linear portions arranged at intervals in a second direction being a direction intersecting with the first direction.

2. The joined body according to claim 1, wherein a distance in the second direction between a pair of the main linear portions adjacent to each other in the second direction is 15 mm or less.

3. The joined body according to claim 1 or 2, wherein a total length of the main linear portions is 74% or more and 97% or less of a total path length of the joint portion.

4. The joined body according to claim 1 or 2,
wherein the main linear portion includes:
a plurality of first main linear portions slanting as a whole to one orientation of a second direction being a direction intersecting with the first direction, and
a plurality of second main linear portions slanting as a whole to an orientation opposite to the orientation of the second direction,
wherein the joint portion includes:
a plurality of first units including a pair of the first main linear portions connected to each other via a first reversing portion, and
a plurality of second units including a pair of the second main linear portions connected to each other via a second reversing portion, and
wherein each of the first units and each of the second units are alternately arranged via a third reversing portion.

5. The joined body according to claim 4, wherein a distance in the second direction between a pair of the first and second main linear portions adjacent to each other in the second direction is 15 mm or less.

6. The joined body according to claim 1 or 2, wherein an arrangement density in the second direction of the main linear portion in an end portion region in the second direction of the second metal member is higher than an arrangement density in the second direction of the main linear portion in a central region in the second direction of the second metal member.
